# EUROPEAN PATENT APPLICATION

(11) **EP 2 136 212 A1**
(43) Date of publication of application: **23.12.2009**
(21) Application number: 08720550.6
(22) Date of filing: 21.03.2008
(51) Int. Cl.: G01P 3/487, G01D 5/245

(54) **ROTATION SENSOR**

(30) Priority: 28.03.2007 JP 2007084365; 18.07.2007 JP 2007186495
(71) Applicant: NTN Corporation, Osaka-shi, Osaka 550-0003 (JP)
(72) Inventor: OZAKI, Takayoshi, Iwata-shi Shizuoka 438-0037 (JP); TAKAHASHI, Toru, Iwata-shi Shizuoka 438-0037 (JP); NISHIKAWA, Kentarou, Iwata-shi Shizuoka 438-0037 (JP)
(74) Representative: Behrmann, Niels
(86) International application number: PCT/JP2008/000670
(87) International publication number: WO 2008/129807

(57) **Abstract**

A rotation detecting sensor (A) is fixed to a sensor fixing member (7), through which it is fitted to a wheel support bearing assembly for detecting the rotation of a rotatable ring of the wheel support bearing assembly. A sensor unit (B) is made up of a sensor element (1) of a magnetic type for detecting an annular to-be-detected element of a rotatable ring, a cable (10) for feeding an output signal of the sensor element (1) to an outside, and a substrate (11) having an electroconductive segment (3) for electrically connecting an electrode (2) of the sensor element (1) with a core line (4) of the cable (10). This sensor unit (B) is fixed to the sensor fixing member (7) by means of the substrate (11). A molding portion (8) is provided around the sensor unit (B) and molded with a thermoplastic elastomer or a rubber material.

## Description

### CROSS REFERENCE TO THE RELATED APPLICATION

This application is based on and claims priority to Japanese patent application No. 2007-084365, filed March 28, 2007, and Japanese patent application No. 2007-186495, filed July 18, 2007, the entire disclosures of which are incorporated by reference as a part of this application.

### BACKGROUND OF THE INVENTION

### (Field of the Invention)

The present invention relates to a rotation detecting sensor that is used as, for example, an ABS sensor for automotive vehicles.

### (Description of the Related Art)

The ABS sensor (a wheel axle rotation sensor for an anti-lock brake system) that is used as fitted to a hub bearing assembly of an automotive vehicle is generally of such a structure including a magnet or a metallic body, provided in a rotatable ring of the hub bearing assembly, and a magnetic sensor such as, for example, a magnetic pickup, a Hall sensor or an MR sensor disposed in face-to-face relation with the magnet or metallic body. The ABS sensor is required to have, inter alia, a mechanical strength, a water resistance, a weatherability and a chemical resistance. For this reason, the sensor component parts are over-molded with a resinous material so that they can be used in practice as a sensor unit structure.

One way of over-molding the sensor component parts has been suggested in, for example, the Patent Document 1 listed below, in which the sensor component parts are, after having been fixed in a sensor fixing holder, over-molded.
[Patent Document 1] JP Laid-open Patent Publication No. 2000-88984

### DISCLOSURE OF THE INVENTION

The sensor unit structure for the ABS sensor manufactured in accordance with the prior art overmolding technique has the following problems.
· Since the molding material is a resin, no adhesion property can be expected between the sensor component parts and/or component parts built in the sensor fixing holder or the like and the molding material.
· There is the possibility that a gap tends to occur between the built-in component parts and the molding material due to the difference in coefficient of thermal expansion that is attributable to self-heating of the sensor component parts, which are electronic component parts, or change in ambient temperature, and, therefore, a problem can be found in water resistance.
· Even when plastic deformation takes place in the molding material by the effect of an external force applied to the sensor unit structure, a gap tends to occur between the built-in component parts and the molding material and, therefore, a problem can be found in water resistance.
· Since the molding material in the form of a resin is low in deforming capability, there is the possibility that in the event that the external force is applied to the sensor unit structure, the built-in component parts may be damaged or deformed by the effect of the external force acting directly on the built-in component parts.
· Since the molding material in the form of a resin has an insufficient vibration absorbing capability, a problem can be found in durability against external vibrations.
· In the event that an external force acts on a signal cable system, which forms a signal transmitting path from the sensor unit structure to the outside, to such an extent as to result in bending of the signal cable system, such external force may be transmitted to sensor devices inside the sensor unit structure, which will eventually leads to damage.
· The prior art molding with the injection mold assembly requires the use of a nozzle for injecting a molten resin, runners for introducing the molten resin into a mold cavity, in which a molded article is shaped, and inflow ports (gates) for leading to the mold cavity. In order to facilitate a smooth flow of the molten resin through those parts to thereby increase the yield, the number of articles to be molded at a time appears to be several to some tens at best and the number of articles to be molder at a time is thus limited.

An object of the present invention is to provide a rotation detecting sensor which is excellent in sealing capability to prevent a water ingress from the outside, which is robust in that no damage occur in sensor component parts and circuits around them under the influence of an external force and/or thermal strains resulting from self-heating or change in temperature of the external environment, and, yet, which can be manufactured inexpensively.

The rotation detecting sensor of the present invention is a rotation detecting sensor fixed to a sensor fixing member, through which it is fitted to a wheel support bearing assembly, for detecting the rotation of a rotatable ring of the wheel support bearing assembly, which includes a sensor unit including a sensor element of a magnetic type provided in coaxial relation with the rotatable member for detecting a rotation of an annular to-be-detected element, a cable for feeding an output signal of the sensor element to an outside, and a substrate having the sensor element thereon and one end portion of the cable fitted thereto and further having an electroconductive segment for electrically connecting an electrode of the sensor element with a core line of the cable. The sensor unit is fixed to the sensor fixing member through the substrate. The rotation detecting sensor further includes a molding portion provided around the sensor unit and molded with a thermoplastic elastomer or a rubber material.

According to the foregoing construction of the present invention, the following functions and effects can be obtained.
· Since the sensor unit made up of such sensor component parts as including the sensor element, the cable and the substrate are molded with a molding material such as, for example, a thermoplastic elastomer or a rubber material, having an elasticity, in the event that an external force and/or vibration act on the rotation detecting sensor, the molding material can absorb such external force and/or vibration to minimize influence which would be eventually brought on the sensor component parts to thereby protect the sensor component parts.
· Since the molding material is in the form of the thermoplastic elastomer or rubber material having an elasticity, even when thermal expansion and/or thermal contraction of a varying degree occur between the sensor component parts and the molding material as a result of self-heating of the sensor component parts, which are electronic component parts, and/or change in ambient temperature, the difference thereof can be absorbed by the elasticity of the molding material to avoid formation of a gap between the sensor component parts and the molding material, allowing the water resistance to be preserved.

In particular, when the molding material is chosen to be the rubber material, the adhesion property between the molding material and metal used in the sensor component parts is feasible and the water resistance can be secured accordingly.

The molding referred to above may be a molding accomplished by the use of a mold assembly. In such case, the mold assembly includes upper and lower molds and the molding portion may be molded by inserting the sensor unit and the thermoplastic elastomer or rubber material between the upper and lower molds and applying a pressure across the upper and lower molds while the latter are heated.

When molding of the molding portion is performed by means of a compressive molding using the mold assembly, a substantial number of rotation detecting sensors can be manufactured at a single molding cycle and, therefore, the cost can be reduced. Also, where the mold assembly is made up of the upper and lower molds, positioning of the sensor unit can be facilitated and a proper pressure can be applied to the thermoplastic elastomer or rubber material.

For the sensor element, a Hall element, a magnetoresistive effect element (MR element), a giant magnetoresistive effect element (GMR element) a tunnel magnetoresistive element (TMR element) or a coil can be employed. Whichever is employed, a desirable rotation detecting sensor can be provided for.

The sensor fixing member is preferably fitted to a stationary ring of a wheel support bearing assembly or its peripheral member.

When the sensor fixing member is fitted to a stationary ring of the wheel support bearing assembly or its peripheral member, there is no need to use any separate member for the fitting of the rotation detecting sensor and the structure can be simplified accordingly.

The sensor fixing member may concurrently serve as a covering for covering an end face of the wheel support bearing assembly.

Even in this case, there is no need to use any separate member for the fitting of the rotation detecting sensor and the structure can be simplified accordingly.

In the practice of the present invention, a portion of the cable proximate to the substrate may be fixed to the sensor fixing member by means of a clamp member provided in the sensor fixing member, in which case the molding portion covers the sensor unit so as to encompass a part of the clamp member.

In particular, when in the molding of the sensor unit, the molding portion is provided to cover the sensor unit so as to encompass at least a part of the clamp member, there is no fear that the cable may bend between the molding portion and the clamp member and, hence, it is possible to assuredly prevent the cable from contacting a rotatable ring or the like of the wheel support bearing assembly, which would occur when it is bent.

Where the molding material is the thermoplastic elastomer, the molding referred to above may be accomplished by means of an injection molding using the mold assembly. In this case, inserting the sensor unit into the mold assembly and subsequent injecting the thermoplastic elastomer into the mold assembly are effective to form the molding portion by means of an injection molding.

Even where the molding material is the rubber material, the molding referred to above may be accomplished by means of an injecting molding using the mold assembly. In such case, inserting the sensor unit into the mold assembly and subsequent injecting the thermoplastic elastomer into the mold assembly are effective to form the molding portion by means of an injection molding.

When the molding portion is molded by means of the injection molding, the manufacture can be facilitated and the productivity become excellent.

Also, where the molding material is the rubber material, the mold assembly referred to above is the one of a type made up of an upper mold and a lower mold and the molding portion referred to above may be molded by charging the sensor unit and the rubber material in one of the upper and lower molds and injection molding the rubber material from the other of the upper and lower molds.

When the molding portion is so molded as hereinabove described, in addition to such an effect that the molding portion is molded by means of solely the injection molding, a further effect can be obtained in which prior insertion of the sensor unit and the rubber material into one of the upper and lower molds can facilitate positioning of the sensor unit.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a front elevational view of a rotation detecting sensor according to a first preferred embodiment of the present invention;
Fig. 1 B is a cross sectional view taken along the line IB-IB in Fig. 1A;
Fig. 1C is a cross sectional view taken along the line IC-IC in Fig. 1A;
Fig. 2 is a diagram showing, on an enlarged scale, a portion indicated by II in Fig. 1A;
Fig. 3A is a front elevational view showing a first structural example of junctions of a sensor element, a cable and a substrate;
Fig. 3B is a rear view of Fig. 3A;
Figs. 4A and 4B are explanatory diagrams showing a method of compressive molding;
Fig. 5 is a front elevational view showing a second structural example of the junctions of the sensor element, the cable and the substrate;
Fig. 6 is a front elevational view showing a third structural example of the junctions of the sensor element, the cable and the substrate;
Fig. 7 is a front elevational view showing a fourth structural example of the junctions of the sensor element, the cable and the substrate;
Fig. 8 is a front elevational view showing a fifth structural example of the junctions of the sensor element, the cable and the substrate;
Fig. 9A is a front elevational view showing a sixth structural example of the junctions of the sensor element, the cable and the substrate;
Fig. 9B is a rear view of Fig. 9A;
Fig. 10A is a fragmentary enlarged front elevational view of the rotation detecting device employing a different method of fixing the substrate to a sensor fixing member;
Fig. 10B is a cross sectional view taken along the line XB-XB in Fig. 10A;
Fig. 11A is a front elevational view of the rotation detecting sensor according to a second preferred embodiment of the present invention;
Fig. 11B is a cross sectional view taken along the line XIB-XIB in Fig. 11A;
Fig. 11C is a cross sectional view taken along the line XIC-XIC in Fig. 11A;
Fig. 12 is a diagram showing, on an enlarged scale, a portion indicated by XII in Fig. 11A;
Fig. 13A is a front elevational view showing the junctions of the sensor element, the cable and the substrate;
Fig. 13B is a rear view thereof;
Figs. 14A and 14B are explanatory diagrams showing one example of a method of molding a molding material;
Figs. 15A and 15B are explanatory diagrams showing another example of the method of molding the molding material; and
Fig. 16 is a sectional view of a wheel support bearing assembly provided with the rotation detecting sensor of the present invention.

### BEST MODE FOR CARRYING OUT THE INVENTION

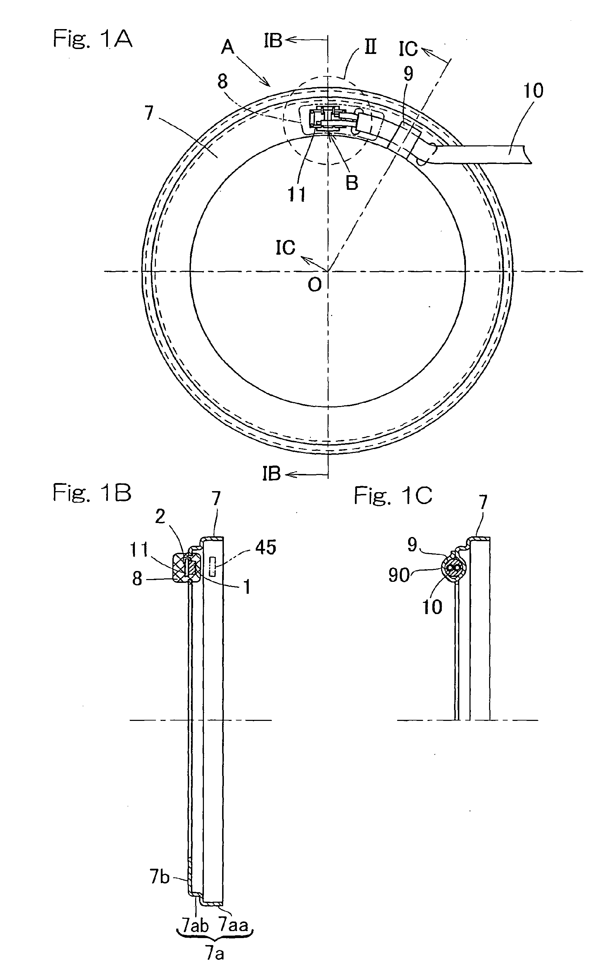

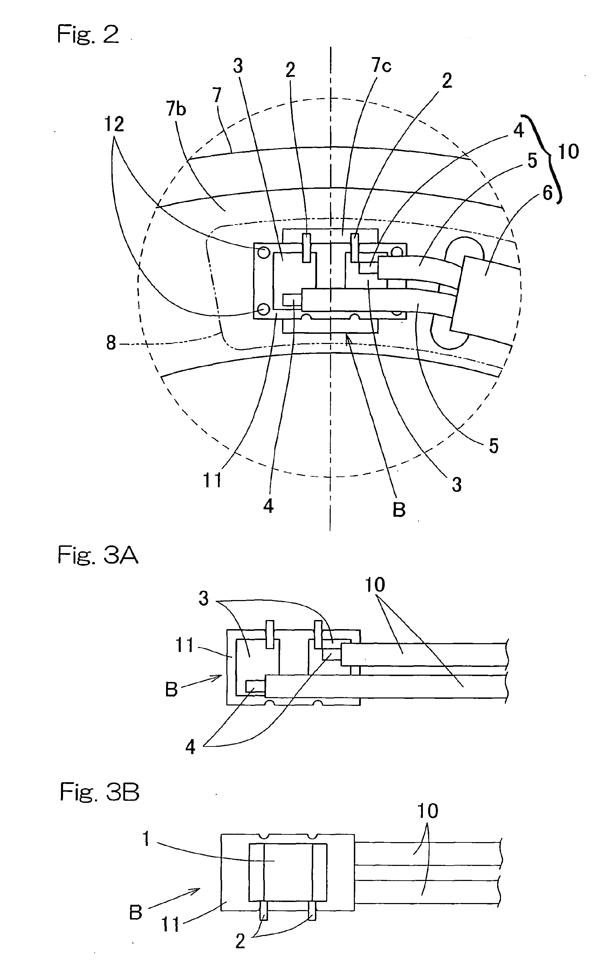

A first preferred embodiment of the present invention will be described with particular reference to Figs. 1A to 1C and Figs. 3A and 3B. A rotation detecting sensor A shown therein includes a sensor unit B made up of a plurality of sensor component parts, which unit B is fixed to a sensor fixing member 7, and a molding portion 8 provided by molding around the sensor unit B. This rotation detecting sensor A is used in combination with a to-be-detected element such as, for example, a magnetic encoder 45.

The sensor unit B referred to above includes a sensor element 1 of a magnetic type, a cable 10 for transmitting an output signal of the sensor element 1 to the outside, and a substrate 11 to which the sensor element 1 and one end of the cable 10 are fitted. The substrate 11 is of a type, in which electroconductive segment 3 (Fig. 3A) are formed on a surface of an insulative substrate, which is made of, for example, a resin, by means of a printed wiring. The sensor element 1 is in the form of, for example, a Hall element, or a magnetoresistive effect element (MR element), or a giant magnetoresistive effect element (GMR element), or a tunnel magnetoresistive element (TMR element), or a coil, or any other magnetic sensor element. In the case of the illustrated first embodiment, as best shown in Fig. 2, the cable 10 has two cable core lines 4, insulating sheathes 5 for covering the respective cable core lines 4 in an electrically insulated fashion, and a cable covering 6 for covering and bundling the insulating sheathes 5 together.

As shown in Fig. 2, the sensor element 1 (Fig. 3B) has electrodes 2 electrically connected respectively with the electroconductive segments 3 on the substrate 11 and the cable core lines 4 of the cable 10 are electrically connected respectively with those electroconductive segments 3. Each of the electroconductive segments 3 is made of a metallic material having a good electroconductivity such as, for example, a copper foil. In other words, the electrodes 2 of the sensor element 1 and the core lines 4 of the cable 10 are electrically connected with each other through the associated electroconductive segments 3. The electroconductive segments 3 are affixed to a front surface side (Fig. 3A) of the substrate 11; the sensor element 1 is fitted to a rear surface side (Fig. 3B) of the substrate 11; and the electrodes 2 of the sensor element 1 extend towards the outside after having passed from the rear surface side to the front surface side of the substrate 11 through throughholes (not shown), defined in the substrate 11 so as to extend completely across the thickness of the substrate 11. The electrodes 2 and the electroconductive segments 3 are electrically connected with each other by means of a pressure bonding, soldering, thermal compression bonding or any other suitable jointing method. Also, the cable core lines 4 and the electroconductive segments 3 are electrically connected with each other by means of pressure bonding, soldering, or any other suitable jointing method.

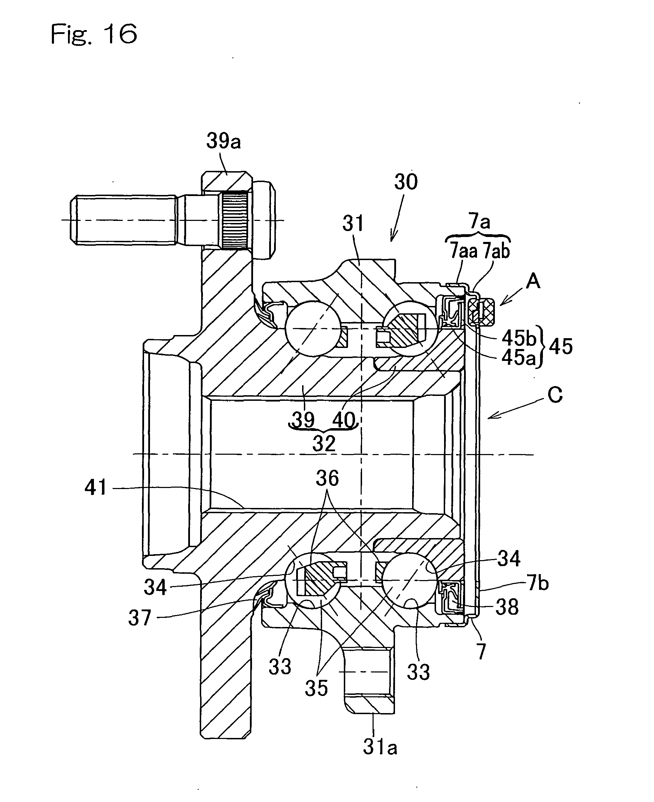

The sensor fixing member 7 is of a type concurrently serving as a covering for covering an end face of a wheel support bearing assembly (Fig. 16) and is a metallic member shaped by the use of, for example, any known sheet metal processing. As shown in Fig. 1B, this sensor fixing member 7 includes a stepped toric body 7a, having a large diameter portion 7aa and a reduced diameter portion 7ab, and a collar 7b extending from an end edge of the reduced diameter portion 7ab of the toric body 7a in a direction radially inwardly thereof. As best shown in Fig. 2, the substrate 11 is fixed to the collar 7b of the sensor fixing member 7 by means of fixing members 12 so that the sensor unit B can be fixed to the sensor fixing member 7. The collar 7b has an opening 7c defined therein, and the sensor element 1 protrudes through this opening 7c to assume a position on a side opposite to a fixing surface of the substrate 11. For the fixing members 12, various members such as, for example, pins, screws or rivets can be employed.

Also, as shown in Figs. 1A and 1C, the sensor fixing member 7 has a portion thereof provided with a clamp member 9 for fixing a portion of the cable 10 proximate to one end of the cable 10 adjacent the sensor unit B side while that portion is entrained thereby. The clamp member 9 employed in the illustrated embodiment is specifically rendered to be of a type designed to have a projecting piece 90 bent to protrude from an inner peripheral edge of the sensor fixing member 7 in a direction radially outwardly thereof so that the cable 10 can be entrained between the bent projecting piece 90 and the sensor fixing member 7. The projecting piece 90 and that portion of the sensor fixing member 7, where the cable 10 is clamped, are rendered to represent a semicircular sectional shape following the round sectional shape of the outer diameter of the cable 10. Although in the illustrated embodiment, the clamp member 9 has been shown and described as being integral with the sensor fixing member 7, the clamp member 9 may be employed as a member separate from the sensor fixing member 7 and may then be fixed to the sensor fixing member 7.

Molding of the sensor unit B is carried out by means of a compressive molding of a molding material. The molding material may be in the form of a rubber material or thermoplastic elastomer comprised of a material having a rubber elasticity. For the rubber material, nitrile rubber or fluorinated rubber is preferred. They are excellent in heat resistance, low temperature characteristic and oil resistance. Any other rubber material than those enumerated above may be employed. For the thermoplastic elastomer, a vinyl chloride system, an ester system or an amide system is preferred. They are excellent in heat resistance and oil resistance. Other than them, a resin of an epoxy system can be employed as a molding material.

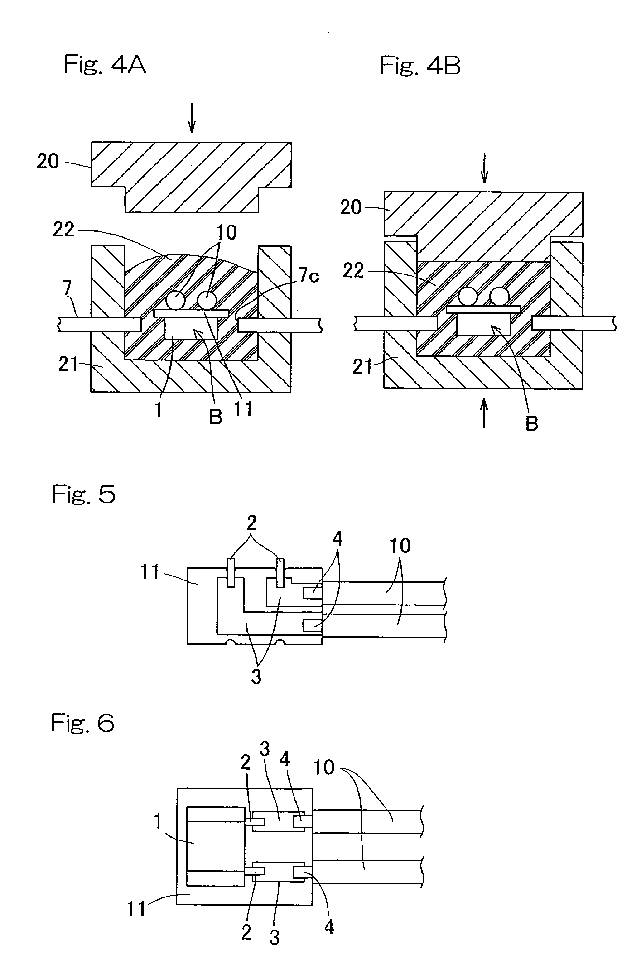

Compressive molding of the molding material is desirably in the form of a compressive molding with the use of a mold assembly. The compressive molding with the use of the mold assembly is carried out by inserting the sensor unit B, the sensor fixing member 7 and the molding material 22 in between an upper mold 20 and a lower mold 21, which form the mold assembly, as shown in Fig. 4A and then applying a pressure between the upper and lower molds 20 and 21, as shown in Fig. 4B, while the latter are heated. Since the substrate 11 is fixed to the sensor fixing member 7, there is no possibility that the sensor unit B may be displaced in position under the influence of an internal pressure inside the mold assembly 20 and 21 during the compressive molding, and, therefore, the sensor unit B can be easily positioned. Also, when the mold assembly is of a type including the upper mold 20 and the lower mold 21, positioning of the sensor unit B can be facilitated and a proper pressure can be applied to the thermoplastic elastomer or rubber material. Additionally, when molding to form the molding portion 8 is in the form of the compressive molding with the use of the mold assembly, a substantial number of rotation detecting sensors A can be manufactured at a single molding cycle and, therefore, the cost can be reduced.

The rotation detecting sensor A of the construction described above is such that since the sensor unit B is molded with the molding material having an elasticity such as, for example, the thermoplastic elastomer or rubber material, an external force and/or vibration can be absorbed by the molding portion 8, in the event that such external force and/or vibration act on the rotation detecting sensor A, to minimize the influence on the sensor component parts of the sensor unit B to thereby protect the sensor component parts. Also, since the molding material is prepared from the thermoplastic elastomer or rubber material having an elasticity, even when thermal expansion and/or thermal contraction of a varying degree occur between the sensor component parts and the molding material 8 as a result of self-heating of the sensor component parts, which are electronic component parts, and/or change in ambient temperature, the difference thereof can be absorbed by the elasticity of the molding material 8 to avoid formation of a gap between the sensor component parts and the molding material 8, allowing the water resistance to be preserved. Particularly where the molding material is employed in the form of the rubber material, the adhesion property between the molding material 8 and metal used in the sensor component parts is feasible and the water resistance can be secured accordingly.

Since the sensor fixing member 7 concurrently serves as a covering for the wheel support bearing assembly, positioning of the rotation detecting sensor A can be facilitated and the number of component parts can be reduced. Also, since the sensor fixing member 7 is made of a metallic material, in the event that the molding material is the rubber material, the adhesion property between the sensor fixing member 7 and the molding material 8 is feasible and as a result, the rotation detecting sensor A in its entirety can be assembled in a robust structure.

Since that portion of the cable 10 proximate to the end thereof adjacent the sensor unit B side is fixed to the sensor fixing member 7 by means of the clamp member 9, the clamp member 9 can support a load, in the event that an external force is applied to the cable 10, and therefore, no load is extended to the sensor unit B and the molding portion 8.

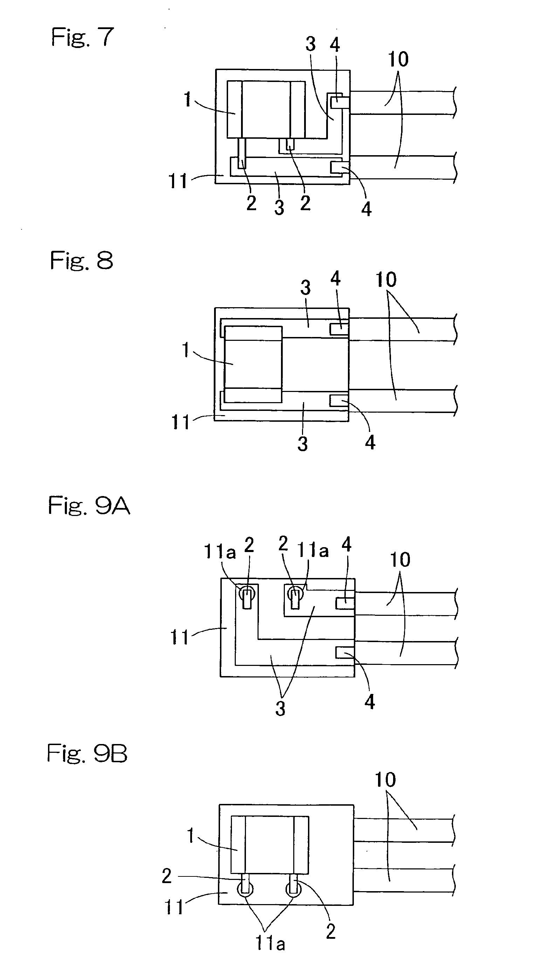

Figs. 5 to Figs. 9A and 9B illustrate different methods of electrically connecting the electrodes 2 of the sensor element 1 and the cable core lines 4 together. Fig. 5 illustrates a second structural example of the junctions of the sensor element 1, the cable 10 and the substrate 11, in which the respective shapes of the electroconductive segments 3 employed in the first embodiment shown in and described with reference to Figs. 1A to 3B are modified so that the two cable core lines 4 can be connected respectively with the electroconductive segments 3 at the same position in a line direction of the cable core line 4. Figs. 6 and 7 similarly illustrate third and fourth structural examples, respectively, in which the sensor element 1 and the electroconductive segments 3 are provided on the same surface of the substrate 11. Fig. 8 also illustrates a fifth structural example, in which without the electroconductive segments provided in the sensor element, the sensor element 1 is connected directly with the electroconductive segments 3. Figs. 9A and 9B yet illustrate a sixth structural example, in which in the event that the sensor element 1 and the electroconductive segments 3 are provided on different surfaces of the substrate 11, respectively, throughholes 11a are defined in the substrate 11 and the electrodes 2 of the sensor element 1 are passed through those throughholes 11a. The electrodes 2 of the sensor element 1 and the cable core lines 4 may be connected together by means of any one of the foregoing methods shown in and described with particular reference to Figs. 3 and 5 to 9B and any suitable method may be selected by combining various conditions.

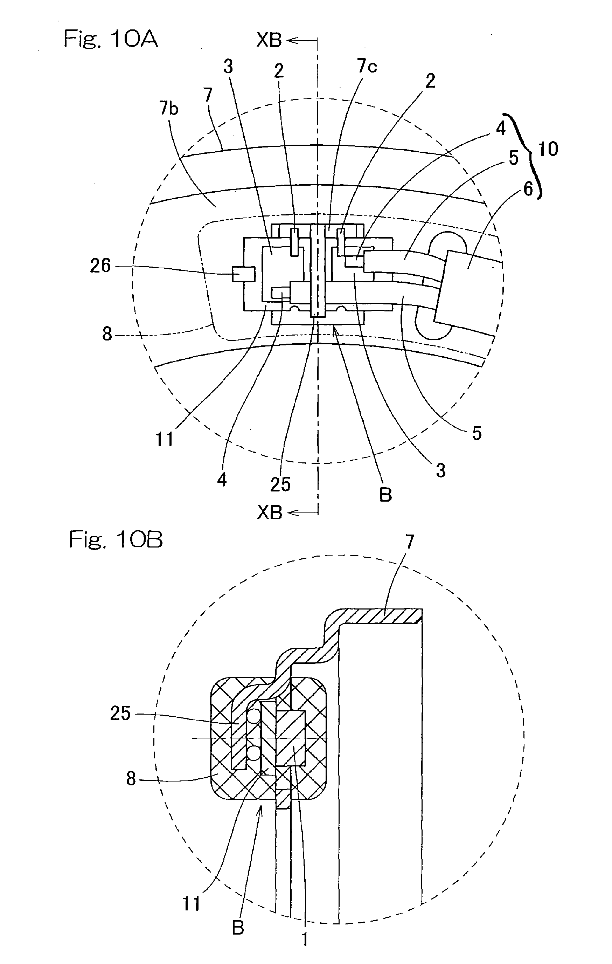

Figs. 10A and 10B illustrate a different method of fixing the substrate 11 to the sensor fixing member 7. This fixing method is such that the sensor fixing member 7 is provided with projections 25 and 26 so that the substrate 11 can be positioned as sandwiched between the projections 25 and 26 and a body of the sensor fixing member 7 to thereby fix the substrate 11 to the sensor fixing member 7. According to this fixing method, no the use of the fixing members 12 is required and, therefore, the number of component parts can be reduced and also, a labor required to mount the fixing members 12 can be eliminated.

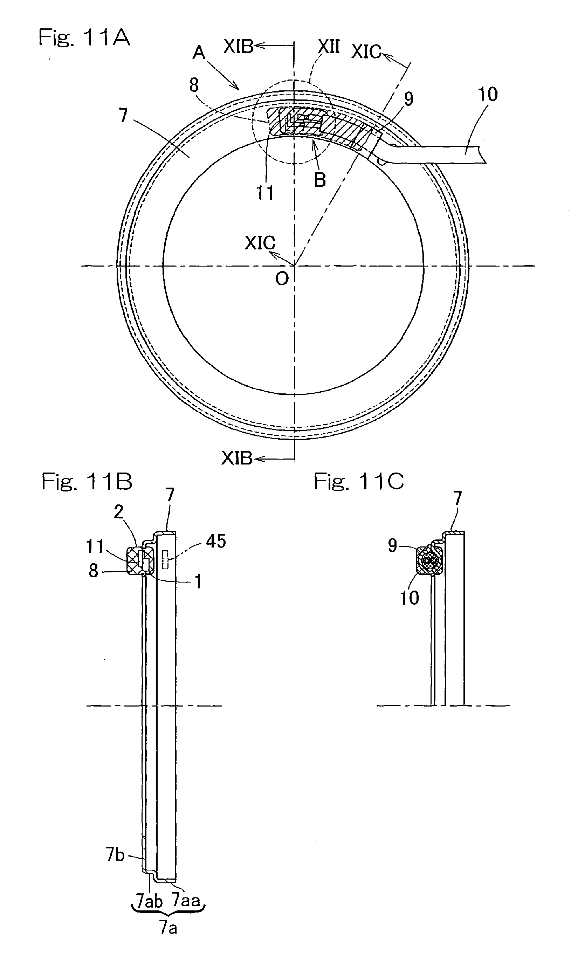

A second preferred embodiment of the present invention will now be described in detail with particular references to Figs. 11A to 13B. Component parts similar to those shown and described in connection with the first embodiment with reference to Figs. 1A to 3B are shown by like reference numerals and, therefore, the details thereof are not reiterated. This second embodiment differs from the previously described first embodiment in that that portion of the cable 10 in the vicinity of the substrate 11 shown in Figs. 11A to 11C is fixed to the sensor fixing member 7 by means of the clamp member 9, provided in the sensor fixing member 7, and the molding portion 8 of the molding material covers the sensor unit B so as to encompass at least a portion of the clamp member 9.

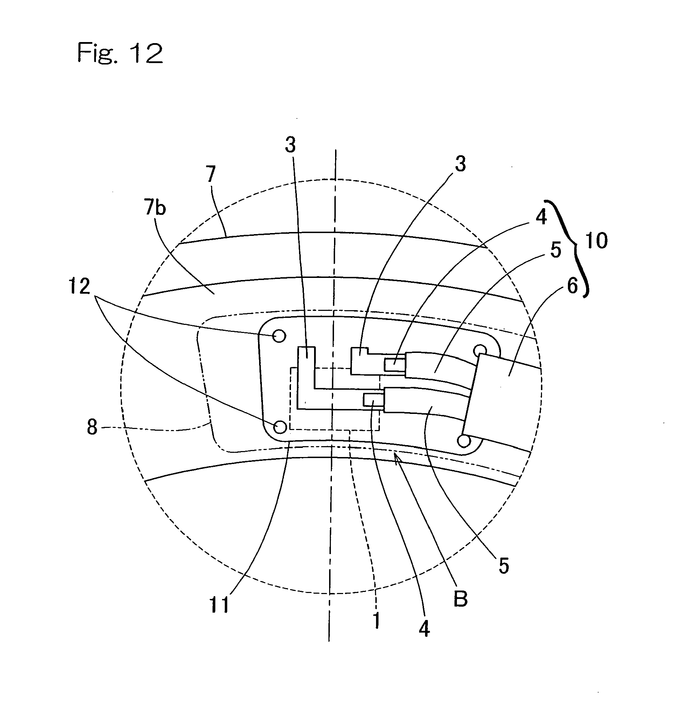

As best shown in Fig. 12, the substrate 11 is fixed to the collar 7b of the sensor fixing member 7 by means of the fixing members 12 to thereby fix the sensor unit B to the sensor fixing member 7. The collar 7b is formed with an opening (not shown), and the sensor element 1 protrudes through this opening towards the side of the substrate opposite to a fixing surface. For the fixing members 12, various members such as, for example, pins, screws or rivets can be employed as is the case with the previously described first embodiment.

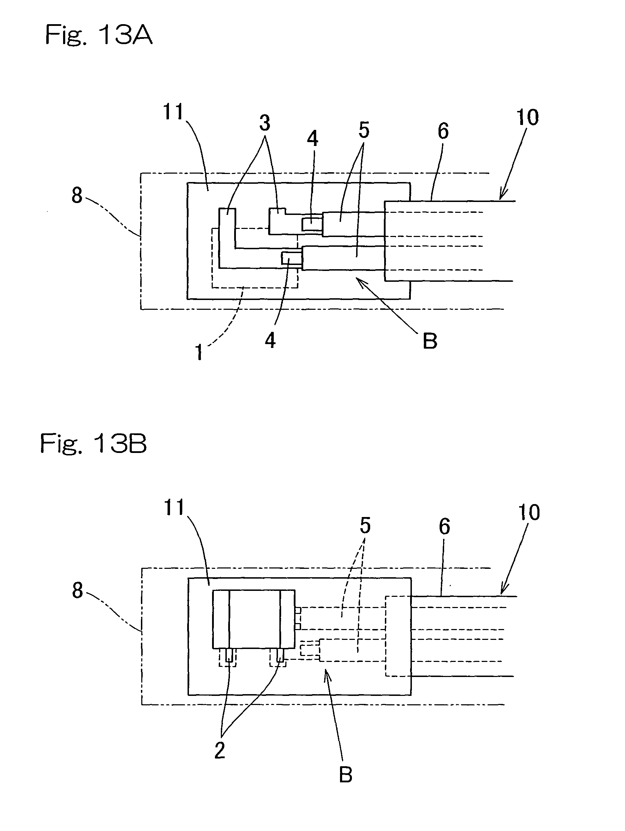

Molding of the sensor unit B is carried out, as shown by the hatched area in Fig. 11A, to provide the molding portion 8 so as to cover the sensor unit B while encompassing at least a portion of the clamp member 9. Connection between the sensor element 1 and the cable 10 is similar to that shown and described in connection with the previously described first embodiment. In other words, as shown in Figs. 13A and 13B, the electrodes 2 of the sensor element 1 and the core lines 4 of the cable 10 are electrically connected together through the respective electroconductive segments 3 in the substrate 11. The electroconductive segments 3 are pasted to a front surface side of the substrate 11 as shown in Fig. 13A, but the sensor element 1 is fitted to a rear surface side of the substrate 11 as shown in Fig. 13B. The electrodes 2 of the sensor element 1 are electrically connected with the respective electroconductive segments 3 on the front surface side of the substrate 11 after having been passed through throughholes (not shown) defined in the substrate 11 so as to extend completely across the substrate 11.

For the molding material, a rubber material, a thermoplastic elastomer or an epoxy resin can be suitably employed. In the case of the rubber material, as is the case with the previously described first embodiment, the molding of the molding material may be accomplished by means of a compressive molding using a mold assembly in accordance with the compressive molding method shown in and described with reference to Fig. 4.

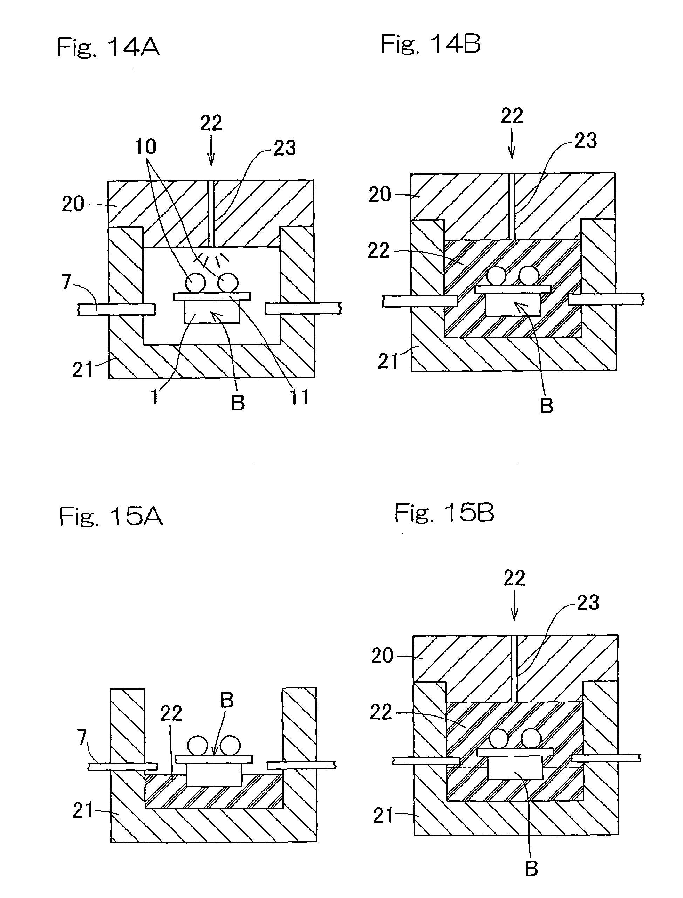

Where the molding material is the thermoplastic elastomer, the molding of the molding material is preferably accomplished by means of an injection molding using a mold assembly. Injection molding with the use of the mold assembly is carried out by, for example, inserting the sensor unit B and the sensor fixing member 7 into separable molds 20 and 21 as shown in Fig. 14A and then injecting the molding material 22 into the molds 20 and 21 so that as shown in Fig. 14B the molding material 22 can be molded. Referring to Fig. 14A, the sensor unit B is fixed at a predetermined position to the sensor fixing member 7. Even where the molding material is the rubber material, molding can be equally accomplished by means of the injection molding. Molding by means of this injection molding is effective to facilitate manufacture and excellent in productivity.

Also, where the molding material is the rubber material, the molding material may be molded according to such a method as shown in Figs. 15A and 15B. In other words, using the mold assembly comprised of the upper mold 20 and the lower mold 21, the molding material 22 is injection molded by inserting the sensor unit B, the sensor fixing member 7 and the molding material 22 beforehand into one of the upper and lower molds (for example, the lower mold 21 in the illustrated example) as shown in Fig. 15A and then injecting the molding material 22 into the upper and lower molds 20 and 21 through a mold material injecting port 23 provided in the other of the upper and lower molds (i.e., the upper mold 20 in the illustrated example) as shown in Fig. 15B. When the molding portion 8 is so molded as described above, in addition to effects brought about when molding is performed solely by means of the injection molding itself, such an effect that positioning of the sensor unit B can be facilitated can be obtained, when the sensor unit B and the molding material 22 are charged beforehand into the lower mold 21.

The rotation detecting sensor A of the above described construction is such that since the sensor unit B is molded with the molding material 22 having an elasticity such as, for example, the thermoplastic elastomer or rubber material, an external force and/or vibration can be absorbed by the molding portion 8, in the event that such external force and/or vibration act on the rotation detecting sensor A, to minimize the influence on the sensor component parts of the sensor unit B to thereby protect the sensor component parts. Also, since the molding portion 8 is prepared from the thermoplastic elastomer or rubber material having an elasticity, even when thermal expansion and/or thermal contraction of a varying degree occur between the sensor component parts and the molding material 8 as a result of self-heating of the sensor component parts, which are electronic component parts, and/or change in ambient temperature, the difference thereof can be absorbed by the elasticity of the molding material 8 to avoid formation of a gap between the sensor component parts and the molding material 8, allowing the water resistance to be preserved.

In particular, in the molding of the sensor unit B, the molding portion 8 is provided to cover the sensor unit B so as to encompass the clamp member 9 and, therefore, there is no possibility of the cable 10 being belt between the molding portion 8 and the clamp member 9, thus effectively eliminating an undesirable contact of the cable 10, when the latter is belt, with a rotatable ring or the like of the wheel support bearing assembly.

Fig. 16 illustrates a wheel support bearing assembly provided with the rotation detecting sensor of the present invention. This wheel support bearing assembly is of a type having the rotation detecting sensor A fitted to a bearing unit 30. It is to be noted that in the specification herein set forth, the term "outboard" is intended to mean one side of an automotive vehicle body away from the longitudinal center of the automotive vehicle body, whereas the term "inboard" is intended to mean the other side of the automotive vehicle body close towards the longitudinal center of the automotive vehicle body.

The bearing unit 30 includes an outer member 31 having an inner periphery formed with double row rolling surfaces 33, an inner member 32 formed with rolling surfaces 34 in face-to-face relation with those rolling surfaces 33, and double row rolling elements 35 interposed between the rolling surfaces 33 in the outer member 31 and the rolling surfaces 34 in the inner member 32. The rows of the rolling elements 35 are retained by respective retainers 36. Opposite ends of a bearing space delimited between the outer member 31 and the inner member 32 are sealed by respective sealing devices 37 and 38.

The outer member 31 is the one that serves as a stationary member and is of one piece construction formed with a flange 31 a on an outer periphery thereof for securement to a knuckle (not shown) extending from a suspension system of an automotive vehicle body. The inner member 32 is the one that serves as a rotatable member and includes a hub axle 39, having a wheel mounting flange 39a formed therein on an outboard side, and an inner ring 40 mounted on an outer periphery of an inboard side end of the hub axle 39. The rows of the rolling surfaces 34 referred to previously are formed in the hub axle 39 and the inner ring 40, respectively. The inner member 32 has a center portion formed with an axially extending throughhole 41 defined therein, and a stem portion (not shown) of one of coupling members of a constant velocity universal joint is inserted into this throughhole 41.

One of the sealing devices 37 and 38, which is positioned on the inboard side, that is, the inboard sealing device 38 has a magnetic encoder 45 incorporated therein and serving as a to-be-detected element. The magnetic encoder 45 is rendered to be of a type, in which a multipolar magnet 45b is provided in a side plate portion of a ring member 45a of an L-sectioned configuration. The ring member 45a includes a cylindrical portion, fitted to an outer periphery of the inner member 32 under interference, and the side plate portion extending from an inboard side end of the cylindrical portion in a direction radially outwardly thereof. The multipolar magnet 45b has a plurality of magnetic poles N and S alternating in a direction circumferentially thereof and may be a plastic magnet or a sintered magnet or the like. In the illustrated embodiment, the magnetic encoder 45 concurrently serves a component part of the inboard sealing device 38 and functions as a slinger.

The sensor fixing member 7 referred to previously is fitted to the outer member 31 with its toric body large diameter portion 7aa mounted on an outer peripheral surface inboard side of the outer member 31 and, also, with a stepped face between the toric body large diameter portion 7aa and a reduced diameter portion 7ab held in engagement with an inboard side end face of the outer member 31. The sensor fixing member 7 concurrently serves as a covering for the inboard side end face of the wheel support bearing assembly. In a condition with the sensor fixing member 7 having been fitted, the rotation detecting sensor A is positioned in face-to-face relation with the magnetic encoder 45.

When the inner member 32, which is the rotatable ring, rotates, the sensor element 1 detects the magnetic poles N and S of the magnetic encoder 45 then rotating together with the inner member 32. A detection signal thereof is transmitted through the cable 10 to an electric control unit (not shown) of the automotive vehicle and, by this electric control unit, the number of revolutions is calculated from the detection signal of the sensor element 1.

The rotation detecting sensor employed in this applied example is of a type, which is oriented in an axial direction relative to the magnetic encoder 45, but the present invention can be equally applied to a type, which is oriented in a radial direction relative to the magnetic encoder 45. For the to-be-detected element, a pulse coder may be employed in place of the magnetic encoder.

Also, the magnetic encoder 45 or the pulse coder as the to-be-detected element may be fitted to a vehicle wheel of the automotive vehicle.

In addition, although in this applied example, the sensor fixing member 7 has been shown and described as fitted directly to the stationary ring, it may be fitted to the stationary ring through a separate member.

It is to be noted that the injection molding technique, in which the mold assembly is employed for molding the molding portion 8 as hereinbefore described in connection with the second embodiment of the present invention, can be equally employed in molding the molding portion 8 used in the practice of the first embodiment of the present invention.

Yet, although not encompassed by the present invention, in each of the first and second embodiments of the present invention, the use of the substrate 11 may be dispensed with. Instead, arrangement may be made that the sensor unit includes electrode terminal members for electrically connecting the core lines of the cable and the electrodes of the sensor element and is arranged at a predetermined position relative to the sensor fixing member, in which the molding portion formed by molding the thermoplastic elastomer or the rubber material is provided around a portion of the sensor fixing member and the sensor unit in its entirety. In such case, there should be provided a clamp member for fixing the cable to the sensor fixing member at a location separate from this molding portion.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A rotation detecting sensor fixed to a sensor fixing member, through which it is fitted to a wheel support bearing assembly, for detecting the rotation of a rotatable ring of the wheel support bearing assembly, which comprises:
a sensor unit including a sensor element of a magnetic type provided in coaxial relation with the rotatable member for detecting a rotation of an annular to-be-detected element, a cable for feeding an output signal of the sensor element to an outside, and a substrate having the sensor element thereon and one end portion of the cable fitted thereto and further having an electroconductive segment for electrically connecting an electrode of the sensor element with a core line of the cable, the sensor unit being fixed to the sensor fixing member through the substrate; and
a molding portion provided around the sensor unit and molded with a thermoplastic elastomer or a rubber material.

2. The rotation detecting device as claimed in Claim 1, in which the molding is a molding accomplished by the use of a mold assembly.

3. The rotation detecting device as claimed in Claim 2, in which the mold assembly comprises upper and lower molds and the molding portion is molded by inserting the sensor unit and the thermoplastic elastomer or rubber material between the upper and lower molds and applying a pressure across the upper and lower molds while the latter are heated.

4. The rotation detecting device as claimed in Claim 1, in which the sensor element comprises a Hall element, a magnetoresistive effect element (MR element), a giant magnetoresistive effect element (GMR element) a tunnel magnetoresistive element (TMR element) or a coil.

5. The rotation detecting device as claimed in Claim 1, in which the sensor fixing member is fitted to a stationary ring of the wheel support bearing assembly or its peripheral member.

6. The rotation detecting device as claimed in Claim 1, in which the sensor fixing member concurrently serves as a covering for covering an end face of the wheel support bearing assembly.

7. The rotation detecting device as claimed in Claim 1, in which a portion of the cable proximate to the substrate is fixed to the sensor fixing member by means of a clamp member provided in the sensor fixing member, in which case the molding portion covers the sensor unit so as to encompass a part of the clamp member.

8. The rotation detecting device as claimed in Claim 7, in which the molding is accomplished by means of an injection molding using the mold assembly by inserting the sensor unit into the mold assembly and subsequent injecting the thermoplastic elastomer into the mold assembly to form the molding portion by means of an injection molding.

9. The rotation detecting device as claimed in Claim 7, in which the molding is accomplished by means of an injection molding using the mold assembly by inserting the sensor unit into the mold assembly and subsequent injecting the rubber material into the mold assembly to form the molding portion by means of an injection molding.

10. The rotation detecting device as claimed in claim 7, in which the mold assembly comprises an upper mold and a lower mold and the molding portion is molded by charging the sensor unit and the rubber material in one of the upper and lower molds and injection molding the rubber material from the other of the upper and lower molds.
